**Europäisches Patentamt**

**European Patent Office**

**Office européen des brevets**

(19)

(11) Veröffentlichungsnummer: **0 214 406**

**A1**

(12) # EUROPÄISCHE PATENTANMELDUNG

(21) Anmeldenummer: 86109627.9

(22) Anmeldetag: 14.07.86

(51) Int. Cl.⁴: **H 04 N 7/13**
**H 04 J 3/16**

(30) Priorität: 18.07.85 DE 3525696

(43) Veröffentlichungstag der Anmeldung:
**18.03.87 Patentblatt 87/12**

(84) Benannte Vertragsstaaten:
**AT BE CH DE FR GB IT LI NL SE**

(71) Anmelder: **Siemens Aktiengesellschaft Berlin und München**
**Wittelsbacherplatz 2**
**D-8000 München 2(DE)**

(72) Erfinder: **Thoma, Wolfgang, Dr.-Ing.**
**Rueppstrasse 34**
**D-8000 München 71(DE)**

(72) Erfinder: **Appelmann, Wolfgang, Dipl.-Ing.**
**Ringstrasse 1**
**D-8000 München 70(DE)**

(54) **Zeitmultiplexsystem zur Übertragung von Video- und Schmalbandsignalen.**

(57) Zeitmultiplexsytem zur Übertragung von Video- und Schmalbandsignalen, bei dem das Videosignal mit einer nominellen Bitrate von 135 Mbit/s zugehörige Stopfsignale, Synchronisiersignalen sowie zusätzliche Schmalbandsignale übertragen werden, wobei ein Pulsrahmen 2176 Zeitschlitze mit jeweils 8 Bits umfaßt, der Pulsrahmen in vier gleiche Teilpulsrahmen (TR1 bis TR4) aufgeteilt ist und jeder Teilpulsrahmen in gleichen Abständen voneinander mehrere insgesamt 16 Zeitschlitze (ZS) umfassende Schmalbandkanäle (SK1 bis SK8) aufweist, die zur Übertragung von Synchronisiersignalen und Schmalbandsignalen vorgesehen sind.

FIG 1

EP 0 214 406 A1

Siemens Aktiengesellschaft
Berlin und München

Unser Zeichen:

VPA 85 P 1462 E

0214406

Zeitmultiplexsystem zur Übertragung von Video- und Schmalbandsignalen

Die Erfindung betrifft ein digitales Zeitmultiplexsystem
zur Übertragung von Video- und Schmalbandsignalen nach
dem Oberbegriff des Patentanspruchs 1.

Mit der Einführung von integrierten digitalen Breitbandnetzen treten neue Anforderungen bezüglich der Flexibilität bei der Kanalbelegung und Bitratenwahl auf. Die für
die Übertragung eines 140 Mbit/s-Signals geltende CCITT-
Empfehlung G 751 für den Pulsrahmen ist für die neuen
Breitband-Netze nicht sonderlich geeignet.

In der DE-OS 32 30 943 ist ein System zur digitalen Übertragung von Video- und Schmalbandsignalen angegeben, das
einen von CCITT abweichenden Pulsrahmen aufweist. Der
Pulsrahmen enthält 2176 Zeitschlitze mit jeweils 10 Bits.
Insbesondere wegen der Breite der Zeitschlitze und einer
Rahmenfrequenz von 6,4 kHz sind verschiedene Kanal-Typen,
die zumeist eine Bitrate von 64 kbit/s oder ein Vielfaches
hiervon aufweisen - in einigen Fällen auch nur eine Bitrate von 32 kbit/s oder 16 kbit/s aufweisen - schwer zu
realisieren.

Aufgabe der Erfindung ist es, ein digitales Zeitmultiplexsystem zur Übertragung von Video- und Schmalbandformation
anzugeben, das zur Übertragung von Schmalbandsignalen mit
unterschiedlichen Bitraten geeignet ist.

P 1 Or / 10.7.1985

Ausgehend von dem Oberbegriff des Patentanspruchs 1 wird diese Aufgabe durch die im kennzeichnenden Teil dieses Patentanspruchs angegebenen Merkmale gelöst.

Vorteilhaft bei dem erfindungsgemäßen Zeitmultiplexsystem ist sowohl die Breite eines Zeitschlitzes von 8 Bits als auch die Rahmenfrequenz von 8 kHz. Durch die Aufteilung in vier gleiche Pulsunterrahmen werden Schmalbandkanäle geschaffen, die jeweils zwei Zeitschlitze (16 Bits) an einander entsprechenden Stellen jedes Teilpulsrahmens umfassen.

In einem Schmalbandkanal kann beispielsweise die Information eines Tonkanals mit 16 x 32 kbit/s = 512 kbit/s übertragen werden. Die Abtastwerte in einem Schmalbandkanal werden mit der Abtastfrequenz (32 kHz) für das Tonsignal übertragen.

Um Signale mit höheren Bitraten übertragen zu können, werden mehrere Schmalbandkanäle zusammengefaßt. Ebenso ist die Aufteilung eines Schmalbandkanals in mehrere Unterkanäle denkbar. In einem Zeitschlitz eines Unterkanals kann jeweils ein Signal mit der Bitrate von 64 kbit/s übertragen werden.

Die Übertragung des Videosignals erfolgt mit der nominellen Bitrate von 135 Mbit/s. In jedem Pulsrahmen sind zur Geschwindigkeitsanpassung (Stopfen) 24 Bits vorgesehen, von denen 18 Bits Stopfinformation für einen 6 Bits umfassenden stopfbaren Zeitabschnitt, also jeweils drei Stopfinformationsbits je Bit des stopfbaren Zeitabschnitts, zugeordnet sind.

Die Erfindung wird anhand von Ausführungsbeispielen näher beschrieben.

Es zeigen

Fig. 1     einen Pulsrahmen mit Oktettstruktur,
Fig. 2     eine Variante dieses Pulsrahmens und die
Fig. 3 bis 5     verschiedene Möglichkeiten der Belegung
von Schmalbandkanälen des Pulsrahmens.

Der schaltungsmäßige Aufbau von Zeitmultiplexsystemen ist hinreichend bekannt. Die Beschreibung befaßt sich daher mit der Struktur des erfindungsgemäßen Pulsrahmens und den unterschiedlichen Nutzungsmöglichkeiten vorgesehener Schmalbandkanäle bei der Übertragung von Schmalbandinformation.

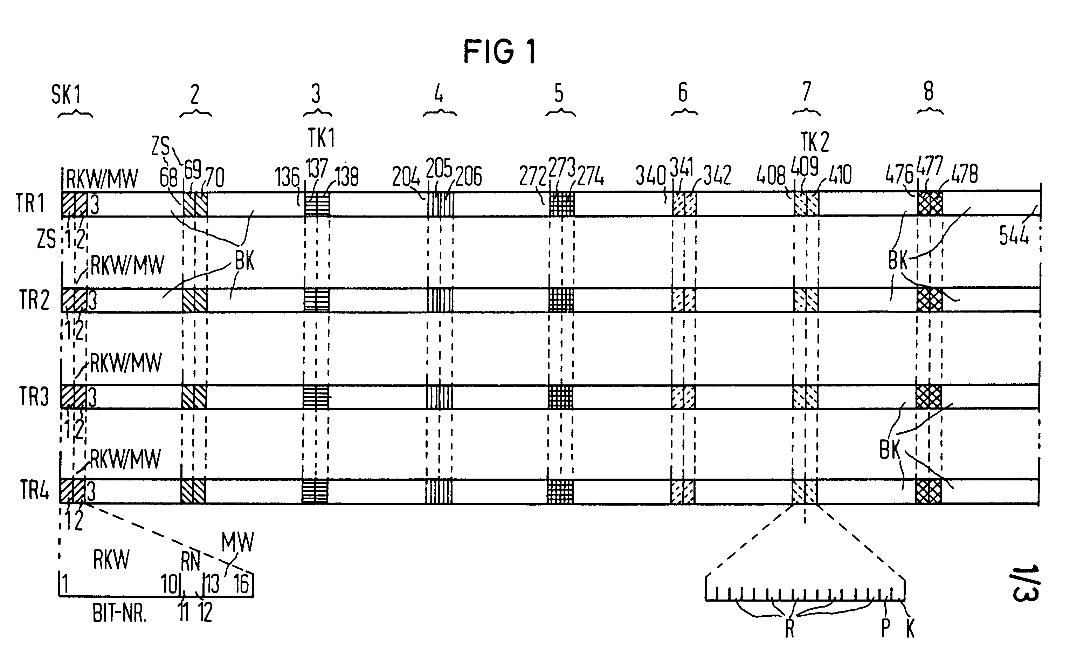

In Fig. 1 ist ein Ausführungsbeispiel des erfindungsgemäßen Pulsrahmens dargestellt. Er besteht aus vier gleichlangen Teilpulsrahmen TR1 bis TR4, die jeweils 544 Zeitschlitze mit je 8 Bits umfassen. Durch Zusammenlegen jeweils zweier aufeinanderfolgender Zeitschlitze ZS1 und ZS2, ZS69 und ZS70 bis ZS477 und ZS478 aller Teilpulsrahmen werden 8 Schmalbandkanäle SK1 bis SK8 gebildet, die jeweils voneinander denselben Abstand aufweisen.

Der Pulsrahmen weist eine Rahmenfrequenz von 8 kHz auf, somit ergibt sich als übertragbare Bitrate für den gesamten Pulsrahmen:

$$4 \times 544 \times 8 \text{ Bits} \times 8 \times 10^3 \frac{1}{s} = 139.264 \text{ kbit/s} \qquad (1)$$

Jeweils ein Zeitschlitz eines Pulsrahmens ermöglicht die Übertragung mit einer Bitrate von 64 kbit/s, für einen Schmalbandkanal ergibt sich die Übertragungsrate von 8 x 64kbit/s = 512 kbit/s.

Im ersten Schmalbandkanal werden in jedem Teilpulsrahmen ein 10 Bits langes Rahmenkennungswort RKW, eine zwei Bits umfassende Rahmennummer RN und vier Meldebits MW übertragen. Die Schmalbandkanäle können nach Belieben belegt werden. So sind in Fig. 1 die Schmalbandkanäle SK3 und SK7 jeweils mit einem Tonkanal TK1 bzw. TK2 belegt. Wie beim Tonkanal TK2 vergrößert dargestellt ist, werden einem Abtastwert eines Tonsignals 16 Bits zugeordnet. Der Abtastwert wird beispielsweise mit 14 Signalbits, codiert, außerdem wird ein Paritätsbit P und ein Kennungsbit K zur Kasnalkennzeichnung hinzugefügt. Der Abtastfrequenz des Tonsignals von 32 kHz entspricht exakt die Rahmenfrequenz der Teilpulsrahmen TR1 bis TR4, also die Frequenz der Zeitschlitze eines Schmalkanales.

Für die Übertragung eines Videosignals stehen die Zeitschlitze zwischen den Schmalbandkanälen zur Verfügung. Das Videosignal wird mit einer nominellen Bitrate von 135 Mbit/s in dem so gebildeten Videokanal BK übertragen. Außerdem sind je Pulsrahmen 24 Bits zur Geschwindigkeitsanpassung zwischen dem zu übertragenden Videosignal und dem Pulsrahmen vorgesehen (Stopfen). 6 Bits hiervon werden alsa stopfbare Zeitabschnitte verwendet, die übrigen 18 Bits dienen als Stopfinformation, wobei jeweils drei Stopfinformationsbits einem stopfbaren Zeitabschnitt von einem Bit zugeordnet sind. Weist das zu übertragene Videosignal exakt die Bitrate von 135 Mbit/s auf, so sind drei der stopfbaren Zeitabschnitte (jeweils 1 Bit lang) mit Informationsbits belegt. Um auch bei Störungen des übertragenen Signals das Stopfverfahren einwandfrei durchführen zu können, ist es empfehlenswert, die Stopfinformation gleichmäßig über den Pulsrahmen zu verteilen.

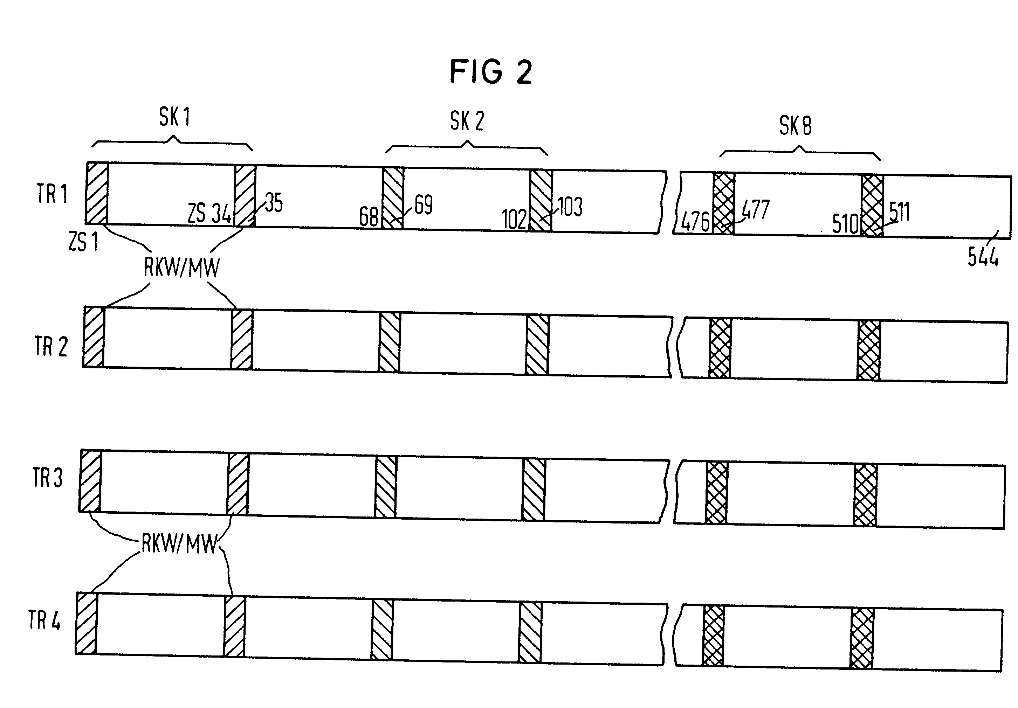

In Fig. 2 ist eine Variante des Pulsrahmens dargestellt. Die Schmalbandkanäl SK1 bis SK8 umfassen wieder zwei Zeitschlitze mit jeweils 8 Bits, die jedoch nicht nebeneinander liegen, sondern gleichmäßig verteilt über die Teilpulsrahmen angeordnet sind. Diese Struktur ist vorzuziehen, wenn hauptsächlich Schmalbandinformationen mit geringen Bitraten übertragen werden, da zwischen zwei der Übertragung von Schmalbandinformation dienenden Zeitschlitzen eines Teilpulsrahmens jeweils ein gleichlanger Verarbeitungszeitraum zur Verfügung steht. Im übrigen gelten auch für diesen Pulsrahmen die gleichen Überlegungen wie zum Pulsrahmen nach Fig. 1. Die folgenden Beispiele einer Belegung der Schmalbandkanäle werden daher nur beim eingangs beschriebenen Pulsrahmen erläutert.

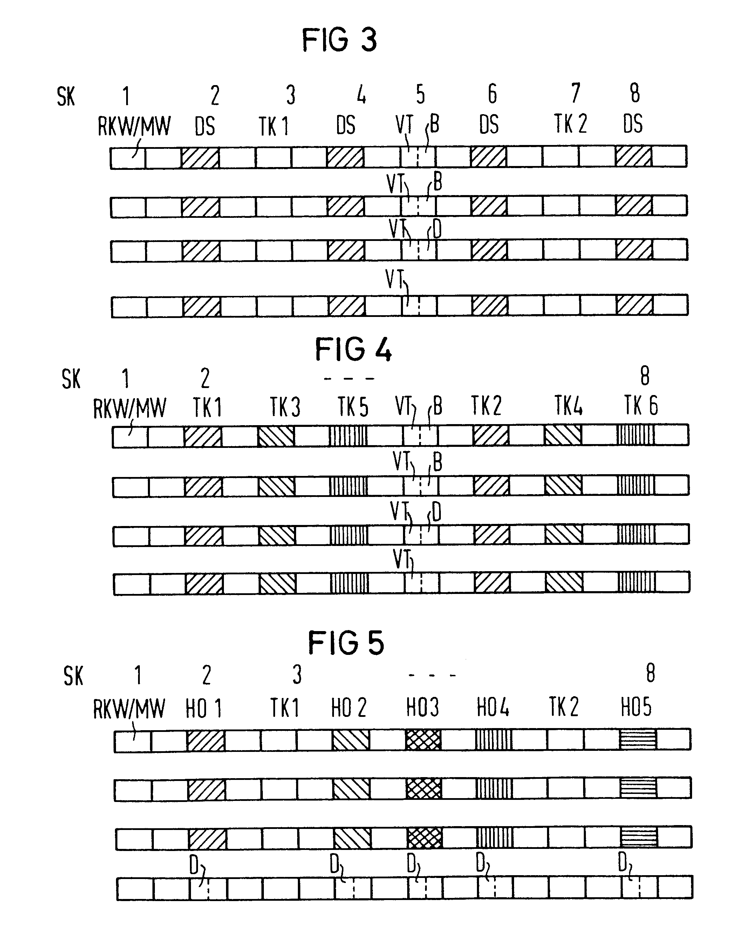

Bei dem in Fig. 3 dargestellten Pulsrahmen sind die Schmalbandkanäle SK2, SK4, SK6 und SK8 mit einem Digitalsignal DS belegt, das eine Bitrate von 2,048 Mbit/s aufweist. Die Schmalbandkanäle SK3 und SK7 dienen wiederum zur Übertragung von Tonsignalen, in beiden Schmalbandkanälen kann somit ein Stereotonsignal übertragen werden.

Der erste 8 Bits umfassende Zeitschlitz des Schmalbandkanales SK5 wird zur Übertragung von Videotextsignalen VT verwendet. Jeder Zeitschlitz eines Teilpulsrahmens gestattet die Übertragung eines Videotextsignals von 64 kbit/s oder die Übertragung zweier herkömmlicher Videotextsignale mit jeweils 32 kbit/s. Jeweils im zweiten Zeitschlitz des Schmalbandkanals SK5 wird in den Zeitschlitzen der ersten drei Teilpulsrahmen ein sogenannter Basic-Access-Kanal B+B+D realisiert. Der D-Kanal hat hierbei nur eine Bitrate von 16 kbit/s, er belegt somit nur zwei Bits des entsprechenden Zeitschlitzes des dritten Teilpulsrahmens.

Der in Fig. 4 dargestellte Pulsrahmen dient zur Übertragung von drei Stereotonsignalen. Die Tonkanäle TK1 und TK2, TK3 und TK4 sowie TK5 und TK6 bilden jeweils einen Stereotonkanal. In dem Schmalbandkanal SK5 werden Videotextsignale und ein Basic-Access-Signal übertragen.

Der in Fig. 5 dargestellte Pulsrahmen ist mit zwei Tonkanälen TK1 und TK2 in den Schmalbandkanälen SK3 und SK7 belegt. Die Schmalbandkanäle SK2, SK4, SK5, SK6 und SK8 bilden einen Subscriber-Multiplex-Access-Kanal, der aus jeweils einem HO+D-Kanal besteht. Der HO-Kanal weist eine Bitrate von 384 kbit/s auf und der zur Signalisierung verwendete D-Kanal eine Bitrate von 64 kbit/s. Jeweils ein HO-Kanal und ein D-Kanal sind hierbei innerhalb eines Schmalbandkanales realisierbar. Die nicht belegten Zeitschlitze im Schmalbandkanal dienen als Reserve und können mit weiterer Schmalbandinformation, z.B. eines Sprachsignals mit 64 kbit/s, belegt werden.

In den dargestellten Pulsrahmen Fig. 3 bis 5 können naturgemäß nicht alle existierenden und in Planung befindlichen Kanalkonfigurationen und Datenschnittstellen - z.B. die erst im Entwurf befindliche CCITT-Empfehlungen für das zu realisierende integrierte Datennetz ISDN - dargestellt werden. Aufgrund der Pulsrahmenfrequenz von 8 kHz, der Zeitschlitzbreite von 8 Bits, damit einer Bitrate von 64 kbit/s jedes Zeitschlitzes und mit einer Bitrate von 512 kbit/s je Schmalbandkanal lassen sich jedoch alle zur Zeit bekannten Datenschnittstellen auf einfache Weise realisieren.

9 Patentansprüche
5 Figuren

## Patentansprüche

1. Digitales Zeitmultiplexsystem zur Übertragung von Video- und Schmalbandsignalen mit einer Bitrate von insgesamt 139,264 Mbit/s, bei dem das Videosignal, das eine nominelle Bitrate von 135 Mbit/s aufweist, zugehörige Stopfsignale, Synchronisiersignale und Schmalbandsignale, die insbesondere eine Bitrate von 64 kbit/s oder ein Vielfaches hiervon aufweisen, zu einem Pulsrahmen zusammengefaßt sind, d a d u r c h g e k e n n z e i c h n e t , daß der Pulsrahmen 2176 Zeitschlitze (ZS) mit jeweils 8 Bits umfaßt, daß der Pulsrahmen in vier gleiche Teilpulsrahmen (TR1 bis TR4) aufgeteilt ist und daß jeder Teilpulsrahmen in gleichen Abständen voneinander Schmalbandkanäle (SK1 bis SK8) aufweist, die je Teilpulsrahmen insgesamt 16 Zeitschlitze (ZS) umfassen und jeweils einen oder zwei Zeitschlitze (ZS) breit sind und zur Übertragung von Schmalband- und Synchronisiersignalen vorgesehen sind.

2. Zeitmultiplexsystem nach Anspruch 1, d a d u r c h g e k e n n z e i c h n e t , daß ein Schmalbandkanal (SK1,SK2 ... SK8) jeweils zwei nebeneinanderliegende Zeitschlitze umfaßt.

3. Zeitmultiplexsystem nach Anspruch 1, d a d u r c h g e k e n n z e i c h n e t , daß ein Schmalbandkanal jeweils zwei im Abstand von 34 Zeitschlitzen vorgesehene Zeitschlitze (ZS1 und ZS35; ZS 69 und ZS 103,...) umfaßt.

4. Zeitmultiplexsystem nach A2 oder A3, d a d u r c h g e k e n n z e i c h n e t , daß der erste Schmalbandkanal zu Beginn jedes Teilpulsrahmens (TR1 bis TR4) zur Übertragung von Synchronisiersignalen vorgesehen ist.

0214406

5. Zeitmultiplexsystem nach Anspruch 4, d a d u r c h g e k e n n z e i c h n e t , daß das Synchronsiersignal ein 10 Bits umfassendes Rahmenkennungswort (RKW), eine 2 Bits umfassende Rahmennummer (RN) und 4 Meldebits (MW) umfaßt.

6. Zeitmultiplexsystem nach Anspruch 1, d a d u r c h g e k e n n z e i c h n e t , daß die nicht der Übertragung von Synchronisierinformation dienenden Schmalbandkanäle (SK2 bis SK8) wahlweise mit Tonsignalen, Sprach- oder Datensignalen belegbar sind.

7. Zeitmultiplexsystem nach Anspruch 1 oder Anspruch 6, d a d u r c h g e k e n n z e i c h n e t , daß die Schmalbandkanäle (SK2 bis SK8) in jeweils 8 Unterkanäle mit einer Bitrate von 64 kbit/s aufgeteilt sind.

8. Zeitmultiplexsystem nach Anspruch 7, d a d u r c h g e k e n n z e i c h n e t , daß mehrere Unterkanäle zur Übertragung von Signalen mit höheren Bitraten zusammengefaßt sind.

9. Zeitmultiplexsystem nach Anspruch 6, d a d u r c h g e k e n n z e i c h n e t , daß mehrere Schmalbandkanäle (SK2, SK4, SK6 und SK8) zur Übertragung von Datensignalen mit höheren Bitraten zusammengefaßt sind.

# FIG 2

0214406

3/3

## FIG 3

## FIG 4

## FIG 5

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A,D | EP-A-0 103 076  (ANT NACHRICHTENTECHNIK GmbH) * Insgesamt * | 1 | H 04 N   7/13 H 04 J   3/16 |
| | --- | | |
| A | DE-A-3 213 534  (KRONE GmbH) | | |
| | --- | | |
| A | DE-A-3 227 780  (ANT NACHRICHTENTECHNIK GmbH) | | |
| | ----- | | |

**RECHERCHIERTE SACHGEBIETE (Int Cl 4)**

H 04 N
H 04 J

Der vorliegende Recherchenbericht wurde für alle Patentansprüche erstellt.

| Recherchenort | Abschlußdatum der Recherche | Prüfer |
|---|---|---|
| DEN HAAG | 26-10-1986 | VERSCHELDEN J. |